# EUROPEAN PATENT APPLICATION

(11) **EP 4 760 190 A1**
(43) Date of publication of application: **17.06.2026**
(21) Application number: 24923120.0
(22) Date of filing: 15.04.2024
(51) Int. Cl.: F28D 7/08

(54) **HEAT EXCHANGE TUBE, BATTERY AND ELECTRICAL DEVICE**

(30) Priority: 06.02.2024 CN 202410172478
(71) Applicant: Contemporary Amperex Technology Co., Limited, Ningde, Fujian 352100 (CN)
(72) Inventor: SONG, Feiting, Ningde, Fujian 352100 (CN); HUANG, Xiaoteng, Ningde, Fujian 352100 (CN)
(74) Representative: Lorenz Seidler Gossel Part. mbB
(86) International application number: PCT/CN2024/087804
(87) International publication number: WO 2025/166895

(57) **Abstract**

A heat exchange tube (10), a battery (1000), and an electric apparatus are provided. The heat exchange tube (10) includes a plurality of straight heat exchange sections (11) and at least one bent section (12). The plurality of straight heat exchange sections (11) are spaced apart. The at least one bent section (12) sequentially connects and communicates with the plurality of straight heat exchange sections (11); where at least one bent section (12) is provided with a first reinforcement member (20).

## Description

### CROSS-REFERENCE TO RELATED APPLICATIONS

This application claims priority to the Chinese Patent Application No. 202410172478.6 filed by Contemporary Amperex Technology Co., Limited on February 6, 2024, which is incorporated herein by reference in its entirety.

### TECHNICAL FIELD

This application relates to the field of battery technologies, and in particular, to a heat exchange tube, a battery, and an electric apparatus.

### BACKGROUND

The structural strength of a heat exchange tube has a significant impact on its service life and risk of airtight failure. Therefore, how to effectively improve the structural strength of the heat exchange tube has become a research focus in the art.

### SUMMARY

Embodiments of this application provide a heat exchange tube, a battery, and an electric apparatus. Reliability of the battery and the electric apparatus can be enhanced by improving the strength of the heat exchange tube.

In a first aspect, an embodiment of this application provides a heat exchange tube, including a plurality of straight heat exchange sections and at least one bent section, the plurality of straight heat exchange sections are spaced apart, the at least one bent section sequentially connects and communicates with the plurality of straight heat exchange sections; where at least one bent section is provided with a first reinforcement member.

In the above technical solution, by sequentially connecting and communicating with the plurality of straight heat exchange sections via the bent section and providing the first reinforcement member within the bent section, defects such as collapse, wrinkling, and excessive thinning can be reduced during the formation of the bent section, thereby enhancing a structural strength of the bent section and providing stronger pressure resistance during heat exchange application of the heat exchange tube. This helps prolong a service life. In addition, since defects are reduced, a contact area for heat exchange between the heat exchange tube and a component requiring heat exchange can increase, improving heat exchange efficiency.

In some embodiments, each bent section is provided with a first reinforcement member.

In the above technical solution, this ensures that each bent section is less prone to defects such as large-area wrinkling or collapse during the bending formation, better improving overall pressure resistance of the heat exchange tube.

In some embodiments, the bent section includes two wall surfaces disposed opposite each other, and the first reinforcement member connects the wall surfaces of two opposite sides.

In the above technical solution, positional stability of the first reinforcement member within the bent section can be increased, making it less prone to displacement during the bending process or heat exchange application, which affects the structural reinforcement effect.

In some embodiments, the wall surfaces are planar.

In the above technical solution, a planar surface helps increase the heat exchange area between the heat exchange tube and the component requiring heat exchange, improving heat exchange efficiency, and facilitating connection between the first reinforcement member and the wall surface to reduce connection difficulty.

In some embodiments, the first reinforcement member includes a plurality of first reinforcement ribs, and the plurality of first reinforcement ribs are spaced apart along a bending radius direction of the bent section and divide a heat exchange flow passage within the bent section into a plurality of secondary flow passages.

In the above technical solution, the plurality of first reinforcement ribs spaced apart in a radial direction can significantly reduce a wrinkling area and provide effective support to the bent section in different radial regions, reducing a possibility of thinning of a sheet material near a radially outer edge region, thereby greatly improving the structural strength of the bent section and reducing risks of collapse, deformation, and cracking.

In some embodiments, the first reinforcement rib extends perpendicular to the wall surface.

In the above technical solution, the first reinforcement rib is perpendicular to the wall surface. This results in a smaller height of the first reinforcement rib, occupying less space. This helps reduce the flow resistance. In addition, the first reinforcement rib provides better support to the wall surface in a height direction.

In some embodiments, the first reinforcement rib extends obliquely relative to the wall surface.

In the above technical solution, widths along the radial direction of at least one of upper side walls and lower side walls of the secondary flow passages at the radially innermost end and the radially outermost end can be reduced, to enhance support to the wall surfaces by the two first reinforcement ribs at the radially innermost end and the radially outermost end.

In some embodiments, the plurality of first reinforcement ribs incline in a same direction.

In the above technical solution, this helps reduce formation difficulty of the plurality of first reinforcement ribs.

In some embodiments, in the bending radius direction of the bent section, the first reinforcement ribs located on two sides of a midpoint of the bent section incline in opposite directions, and the first reinforcement ribs located on a same side of the midpoint of the bent section incline in a same direction.

In the above technical solution, two first reinforcement ribs adjacent to the midpoint of the bent section cooperate with the two wall surfaces to form a trapezoidal or arch-like structure. This helps improve compression resistance near the midpoint of the bent section, and therefore the bent section is less prone to deformation. In addition, with a fixed width of the bent section, this helps reduce a quantity of required first reinforcement ribs, thereby reducing overall flow resistance.

In some embodiments, the plurality of first reinforcement ribs are arranged at an equal interval.

In the above technical solution, this helps reduce the formation difficulty of the plurality of first reinforcement ribs and improve uniformity of the flow resistance of the different secondary flow passages.

In some embodiments, in the bending radius direction of the bent section, a width of the secondary flow passage near the middle is greater than a width of the secondary flow passage near an edge.

In the above technical solution, during bending of the bent section, regions near inner and outer edges are more prone to defects such as wrinkling, deformation, and thinning. Providing denser first reinforcement ribs in the region near the edge helps improve the structural reinforcement effect on the bent section and enhance compression resistance. Providing sparser first reinforcement ribs in a region near the middle can reduce a quantity of required first reinforcement ribs, decrease a space occupied by the first reinforcement member within the bent section, reduce overall flow resistance within the bent section, and improve heat exchange effect.

In some embodiments, an inner-edge bending diameter of the bent section is R, a width of the bent section along the bending radius direction is D, and R/D is 1 to 3; in the bending radius direction of the bent section, the secondary flow passage in the middle is a first secondary flow passage; a plurality of second secondary flow passages are provided on two sides of the first secondary flow passage; the plurality of second secondary flow passages have an equal width; and a width of the first secondary flow passage is greater than the width of the second secondary flow passage.

In the above technical solution, structural reinforcement effect is improved and heat exchange capacity requirements are satisfied. The larger width of the first secondary flow passage reduces the quantity of required first reinforcement ribs and lowers the flow resistance; the plurality of narrower second secondary flow passages can effectively prevent defects such as wrinkling and thinning at the inner and outer edges from spreading toward the middle, reducing defects and confining defects within a relatively small radial range, effectively improving the compression resistance and heat exchange capacity.

In some embodiments, a maximum width of at least two secondary flow passages near the edge is L, a thickness of the bent section in a direction perpendicular to a bending plane is H, and H/L is 0.2 to 3.

In the above technical solution, within the above ratio range, wrinkling and collapse are alleviated while the flow resistance is reduced.

In some embodiments, H/L is 0.8 to 1.2.

In the above technical solution, structural reinforcement effect is further improved, wrinkling and collapse are alleviated, and the flow resistance is reduced.

In some embodiments, the plurality of first reinforcement ribs are arranged symmetrically or centrally symmetrically with respect to the midpoint of the bent section.

In the above technical solution, this improves uniformity of forces on two sides of the midpoint in the radial direction of the bent section, so that thinning and thickening are more uniform. In addition, during production, a tube body may be bent clockwise or counterclockwise, in other words, either of two edges in a width direction of the tube body may be formed as the inner edge of the bent section. This helps improve production efficiency.

In some embodiments, the inner-edge bending diameter of the bent section is R, the width of the bent section along the bending radius direction is D, and R is greater than or equal to D.

In the above technical solution, within the above ratio range, the strength of the bent section can be reinforced by the first reinforcement member without causing excessive flow resistance, ensuring both the service life and heat exchange capacity.

In some embodiments, a second reinforcement member is provided within the straight heat exchange section.

In the above technical solution, the second reinforcement member can improve a structural strength of the straight heat exchange section to further enhance the overall strength of the heat exchange tube and improve pressure resistance.

In some embodiments, the second reinforcement member includes one second reinforcement rib, and the second reinforcement rib is disposed in the middle of the straight heat exchange section in a width direction of the straight heat exchange section.

In the above technical solution, providing fewer second reinforcement ribs can satisfy strength requirements while reducing flow resistance for a heat exchange medium within the straight heat exchange section. This helps improve heat exchange effect.

In some embodiments, the first reinforcement member includes the plurality of first reinforcement ribs spaced apart along the bending radius direction of the bent section, the second reinforcement member includes a plurality of second reinforcement ribs, and the second reinforcement ribs are connected to the first reinforcement ribs in one-to-one correspondence.

In the above technical solution, the heat exchange medium in the plurality of secondary flow passages within the bent section can smoothly flow into the straight heat exchange section under the guidance of the first reinforcement ribs and the second reinforcement ribs. In embodiments where the straight heat exchange section and the bent section are integrally formed, the first reinforcement ribs and the connected second reinforcement ribs can be integrally formed, in other words, the single heat exchange tube may be bent to form the straight heat exchange section and bent section. In this way, lengths of each straight heat exchange section and bent section are more flexible without being restricted by the internal first reinforcement ribs and second reinforcement ribs. This helps improve production efficiency.

In some embodiments, the heat exchange tube is formed by bending a single tube; and/or the heat exchange tube is a flat tube.

In the above technical solution, assembly processes between the straight heat exchange section and the bent section are not required, improving production efficiency. Further, since joining and sealing are not required, a risk of sealing failure is reduced.

In some embodiments, the bent section and the first reinforcement member are integrally formed.

In the above technical solution, integral formation eliminates the assembly process of mounting the first reinforcement member in the small space within the bent section, improving production efficiency; and ensures reliable connection between the first reinforcement member and the bent section, so that relative movement is less likely during the bending formation process, which affects the reinforcement effect.

In some embodiments, the straight heat exchange section extends along a first direction; the plurality of straight heat exchange sections are spaced apart along a second direction; the first direction is perpendicular to the second direction; and the bent section is connected to two straight heat exchange sections that are spaced apart, and the bent section is semi-circular arc-shaped.

In the above technical solution, the orderly arrangement of the plurality of straight heat exchange sections helps increase occupied space in the first direction and the second direction, thereby increasing the heat exchange area and improving heat exchange capacity.

In some embodiments, among any three adjacent straight heat exchange sections along the second direction, a first end of a middle straight heat exchange section is connected to a first end of one adjacent straight heat exchange section via the bent section, and a second end of the middle straight heat exchange section is connected to a second end of another adjacent straight heat exchange section via the bent section.

In the above technical solution, from one end to the other end in the second direction, the entire heat exchange tube is formed as a serpentine tube reciprocating along the first direction, better increasing the heat exchange area. In addition, specifications of the required straight heat exchange sections and bent sections are relatively uniform, and each bent section is less prone to interference from the positions of other straight heat exchange sections and bent sections during bending, improving production efficiency.

In some embodiments, at least two straight heat exchange sections extend at an angle, and the bent section is arc-shaped and connects the two straight heat exchange sections extending at an angle.

In the above technical solution, by changing a bending angle of the bent section, an angle between two adjacent straight heat exchange sections may be changed, and therefore an extension path of the heat exchange tube is more flexible.

In some embodiments, the heat exchange tube includes a first heat exchange tube; the first heat exchange tube includes a first heat exchange flow passage and a second heat exchange flow passage; the second heat exchange flow passage is bent to form a U-shaped region; and the first heat exchange flow passage is bent and disposed within the U-shaped region, and is bent and connected to the second heat exchange flow passage.

In the above technical solution, by bending the second heat exchange flow passage to form the U-shaped region and bending the first heat exchange flow passage within the U-shaped region, when the heat exchange tube exchanges heat with the battery assembly, the U-shaped region formed by the peripheral second heat exchange flow passage can be positioned opposite a peripheral battery cell of the battery, and the first heat exchange flow passage within the U-shaped region may be positioned opposite an internal battery cell, allowing the heat exchange tube to compensate for the internal-external temperature difference caused by heat exchange between the peripheral battery cell and the environment. In this way, the heat exchange effect on the peripheral battery cell of the battery assembly and that on the internal battery cell of the battery assembly are substantially consistent, improving temperature uniformity of the battery, thereby prolonging a service life of the battery to a certain extent.

In some embodiments, the first heat exchange flow passage includes a plurality of first heat exchange portions; and the plurality of first heat exchange portions are spaced apart and are sequentially bent and connected.

In the above technical solution, providing the plurality of first heat exchange portions can increase the heat exchange area of the first heat exchange flow passage, thereby increasing the heat exchange area of the first heat exchange tube and improving the heat exchange effect of the first heat exchange tube; further, since internal battery cells are surrounded by external battery cells and the internal battery cells has small temperature differences among themselves, providing the plurality of first heat exchange portions can improve overall heat exchange effect while a temperature difference between internal and external battery cells is reduced.

In some embodiments, the second heat exchange flow passage includes: a second heat exchange portion, a third heat exchange portion, and a fourth heat exchange portion; the second heat exchange portion extends along a first side periphery of the first heat exchange flow passage; the third heat exchange portion is connected between the second heat exchange portion and the first heat exchange flow passage and extends along a second side periphery of the first heat exchange flow passage; a first end of the third heat exchange portion is connected to the second heat exchange portion at an angle and a second end is connected to the first heat exchange flow passage at an angle; and the fourth heat exchange portion communicates with the second heat exchange portion, is connected to the second heat exchange portion at an angle, and extends along a third side periphery of the first heat exchange flow passage.

In the above technical solution, arranging the second heat exchange portion, the third heat exchange portion, and the fourth heat exchange portion on three sides of the first heat exchange flow passage respectively allows the second heat exchange flow passage to surround the first heat exchange flow passage, and therefore, the first heat exchange tube is arranged more compactly, achieving structural miniaturization of the first heat exchange tube. This helps improve a volumetric energy density of the battery, while also simplifying the structure of the first heat exchange tube and facilitating processing and production of the heat exchange tube.

In some embodiments, the first heat exchange tube further includes a third heat exchange flow passage, the first heat exchange flow passage is connected between the third heat exchange flow passage and the second heat exchange flow passage, and the third heat exchange flow passage is connected to the first heat exchange flow passage at an angle.

In the above technical solution, providing the third heat exchange flow passage can further increase the heat exchange area of the first heat exchange tube, thereby further improving the heat exchange effect of the first heat exchange tube.

In some embodiments, the first heat exchange flow passage includes a plurality of first heat exchange portions, the plurality of first heat exchange portions are sequentially bent and connected in the second direction, the third heat exchange flow passage is disposed on a side of the first heat exchange flow passage facing away from the third heat exchange portion, the third heat exchange flow passage is connected to one of the plurality of first heat exchange portions that is closest to the second heat exchange portion along the second direction, the third heat exchange flow passage extends along the second direction in a direction away from the second heat exchange portion, the first heat exchange portion extends along a first direction, and the first direction and the second direction are arranged at an angle.

In the above technical solution, adding the third heat exchange flow passage and connecting the third heat exchange flow passage to one of the plurality of first heat exchange portion that is closest to the second heat exchange portion along the second direction Y can increase the heat exchange area, reducing temperature differences in the battery assembly, and improving temperature uniformity of the battery assembly.

In a second aspect, an embodiment of this application further provides a battery, including the above heat exchange tube.

In some embodiments, the battery includes a plurality of the heat exchange tubes, where the plurality of heat exchange tubes are spaced apart along a second direction or arranged around each other; at least one of the heat exchange tubes is a first heat exchange tube; the first heat exchange tube includes a first heat exchange flow passage and a second heat exchange flow passage; the second heat exchange flow passage is bent to form a U-shaped region; the first heat exchange flow passage is bent and disposed within the U-shaped region, and is bent and connected to the second heat exchange flow passage; and the plurality of heat exchange tubes are arranged in parallel.

In the above technical solution, providing one or more heat exchange tubes, with the plurality of heat exchange tubes spaced apart along the second direction Y or arranged around each other, can increase the diversity of heat exchange tubes, thereby improving adaptability of the heat exchange tubes to satisfy different requirements for the battery and enhancing market competitiveness of the battery. Further, parallel arrangement of the plurality of heat exchange tubes allows simultaneous heat exchange of the plurality of heat exchange tubes, reducing heat exchange time of the heat exchange tubes and improving heat exchange efficiency.

In some embodiments, the battery further includes: a box assembly and a battery assembly, where the box assembly includes an integrally stamped box body, the box body includes a bottom wall and a surrounding wall, the battery assembly is disposed within the box body, and the battery assembly includes a plurality of battery cells.

In the above technical solution, since the bottom wall and the surrounding wall of the box body are integrally stamped, no sealing is required at a connection between the bottom wall and the surrounding wall, improving sealing effect and preventing mud and water from infiltrating the box body through the connection between the bottom wall and the surrounding wall, which affects the battery assembly. This enhances reliability of the battery. In addition, the integrally stamped box body requires no joining process, improving production efficiency.

In some embodiments, the battery includes a temperature regulation member; the temperature regulation member includes at least one of a first temperature regulation member, a second temperature regulation member, and a third temperature regulation member; and at least one of the first temperature regulation member, the second temperature regulation member, and the third temperature regulation member forms the heat exchange tube, where the first temperature regulation member is disposed outside the box body and attaches to an outer wall of the box body; the second temperature regulation member is disposed within the box assembly and located between the battery assembly and the box assembly; and the third temperature regulation member is disposed within the box assembly and located between two adjacent battery cells.

In the above technical solution, the battery cells generate heat during operation, or the battery cells are heated in low-temperature environments to maintain the battery cells in an appropriate temperature range. Providing the temperature regulation member enables temperature regulation of the battery cells, improving stability of the battery cells, and enhancing endurance of the battery.

In a third aspect, an embodiment of this application further provides an electric apparatus including the above battery.

### BREIF DESCRIPTION OF DRAWINGS

FIG. 1 is a schematic diagram of a vehicle provided in an embodiment of this application;
FIG. 2 is an exploded view of a battery provided in some embodiments of this application;
FIG. 3 is a schematic structural diagram of a heat exchange tube provided in some embodiments of this application;
FIG. 4 is an exploded view of the heat exchange tube shown in FIG. 3;
FIG. 5 is a schematic structural diagram of a part of the heat exchange tube shown in FIG. 3;
FIG. 6 is a cross-sectional view of a bent section provided in a first embodiment of this application along line A-A in FIG. 5;
FIG. 7 is a cross-sectional view of a bent section provided in a second embodiment of this application;
FIG. 8 is a cross-sectional view of a bent section provided in a third embodiment of this application;
FIG. 9 is a cross-sectional view of a bent section provided in a fourth embodiment of this application;
FIG. 10 is a cross-sectional view of a straight heat exchange section provided in an embodiment of this application along line B-B in FIG. 5;
FIG. 11 is a schematic structural diagram of a part of a battery provided in some embodiments of this application;
FIG. 12 is a schematic structural diagram of a part of a battery provided in other embodiments of this application;
FIG. 13 is a schematic structural diagram of a part of a battery provided in still other embodiments of this application;
FIG. 14 is a cross-sectional view of a part of a battery provided in some embodiments of this application;
FIG. 15 is an exploded view of partial components of a battery provided in some embodiments of this application; and
FIG. 16 is an assembly diagram of partial components of a battery provided in some embodiments of this application.

### Reference signs:

vehicle 1; battery 1000; controller 2000; motor 3000;
battery assembly 200; battery cell 210; box assembly 300; box body 310; bottom wall 311; surrounding wall 312; box cover 320; expansion beam 330; bottom guard plate 340;
heat exchange member 100; first temperature regulation member 110; second temperature regulation member 120; third temperature regulation member 130;
heat exchange tube 10; first heat exchange tube 102; second heat exchange tube 103; straight heat exchange section 11; bent section 12; wall surface 121; secondary flow passage 13; first secondary flow passage 131; second secondary flow passage 132;
first reinforcement member 20; first reinforcement rib 21;
second reinforcement member 30; second reinforcement rib 31;
joint 40;
U-shaped region 50; first heat exchange flow passage 51; first heat exchange portion 511; second heat exchange flow passage 52; second heat exchange portion 521; third heat exchange portion 522; fourth heat exchange portion 523; third heat exchange flow passage 53;
first direction X; second direction Y; and third direction Z.

### DESCRIPTION OF EMBODIMENTS

To make the objectives, technical solutions, and advantages of the embodiments of this application clearer, the technical solutions in the embodiments of this application are clearly described below with reference to the drawings in the embodiments of this application. It is clear that the described embodiments are some rather than all of the embodiments of this application. All other embodiments obtained by persons of ordinary skill in the art based on the embodiments of this application without creative efforts shall fall within the protection scope of this application.

Unless otherwise defined, all technical and scientific terms used in this application have the same meanings as those commonly understood by persons skilled in the technical field to which this application pertains. The terms used in this specification of this application are merely for the purpose of describing specific embodiments and are not intended to limit this application. The terms "include" and "have" and any variations thereof in the specification, claims, and brief description of drawings of this application are intended to cover non-exclusive inclusion. The terms "first", "second", and the like in the specification, claims, or drawings in this specification of this application are used to distinguish different objects and are not used to describe a specific order or primary-secondary relationship.

Reference to "an embodiment" in this application means that a specific feature, structure, or characteristic described with reference to the embodiment may be included in at least one embodiment of this application. The appearance of this phrase in various places in the specification does not necessarily refer to the same embodiment, nor is it a separate or alternative embodiment that is mutually exclusive with other embodiments.

In the description of this application, it should be noted that, unless otherwise explicitly specified and defined, the terms "mount", "join", "connect", and "attach" should be understood in a broad sense, for example, it may be a fixed connection, a detachable connection, or an integral connection; it may be a direct connection or an indirect connection through an intermediate medium, or it may be internal communication between two elements. For persons of ordinary skill in the art, the specific meanings of the above terms in this application can be understood according to specific situations.

The term "and/or" in this application is merely an association relationship describing associated objects, indicating that three relationships may exist, for example, A and/or B may indicate: A alone, both A and B, and B alone. In addition, the character "/" in this application generally indicates that the associated objects before and after it are in an "or" relationship.

In the embodiments of this application, identical reference signs denote identical components, and for brevity, detailed descriptions of identical components are omitted in different embodiments. It should be understood that a thickness, length, width, and other dimensions of various components in the embodiments of this application shown in the drawings, as well as an overall thickness, length, and width of an integrated apparatus, are merely examples and should not constitute any limitation to this application.

"Plurality" in this application means two or more (including two).

At present, from the perspective of market development, the application of traction batteries is becoming increasingly widespread. Traction batteries are not only used in energy storage power systems such as hydraulic, thermal, wind, and solar power stations but also widely applied in electric vehicles such as electric bicycles, electric motorcycles, and electric automobiles, as well as in military equipment and aerospace fields. With the continuous expansion of traction battery application, market demand is also continuously increasing.

It can be understood that a temperature inside a battery is affected by external weather, and a battery cell inside the battery operates within a certain temperature range. When the temperature inside the battery exceeds or falls below this range, the stability and performance of the battery is significantly affected. For example, in hot weather, the battery cell needs cooling and heat dissipation to keep an internal temperature within the required temperature range; in cold weather, the battery cell is heated to maintain the internal temperature within the required temperature range.

A heat exchange member may be used to circulate a heat exchange medium and exchange heat with a component requiring heat exchange, such as a battery, to transfer heat of heat exchange medium to the component requiring heat exchange or cool the component requiring heat exchange, achieving heat exchange with the component requiring heat exchange to heat or cool the component requiring heat exchange, thereby regulating temperature and maintaining the component requiring heat exchange within a more suitable temperature range.

A structural strength of a heat exchange tube in a heat exchange member significantly affects its service life and risk of airtight failure. For example, in embodiments where the heat exchange member is used in a battery, a low structural strength of the heat exchange tube may lead to insufficient pressure-bearing capacity, easily causing structural deformation, damage, airtight failure, or the like due to external forces such as a weight of a battery assembly, a swelling force of a battery cell, or external impact, deteriorating a heat exchange capacity or causing heat exchange medium leakage. Therefore, improving the structural strength of the heat exchange tube has become a research focus in the art.

Particularly for heat exchange tubes including bent structures, bent regions are prone to defects such as collapse and wrinkling during bending, affecting the structural strength and airtight reliability of the heat exchange tubes.

In some related technologies, during bending, fillers such as emery, ice, or retractable mandrels are filled into the heat exchange tube to improve collapse and wrinkling issues. However, fillers require processes such as sealing, freezing, and extraction, increasing process difficulty and time consumption. In addition, after bending, the fillers need to be removed, leaving the heat exchange tube still at risk of collapse and deformation.

Based on this, this application proposes a heat exchange tube, including a plurality of straight heat exchange sections and at least one bent section, where the plurality of straight heat exchange sections are spaced apart, the at least one bent section sequentially connects and communicates with the plurality of straight heat exchange sections, and at least one bent section is provided with a first reinforcement member.

In the heat exchange tube of this structure, by sequentially connecting and communicating with the plurality of straight heat exchange sections via the bent section and providing the first reinforcement member within the bent section, a heat exchange area of the heat exchange tube can be increased, improving heat exchange performance, and reducing defects such as collapse, wrinkling, and excessive thinning during the formation of the bent section, thereby enhancing a structural strength of the bent section and providing stronger pressure resistance during heat exchange application of the heat exchange tube. This helps prolong a service life.

The heat exchange tube disclosed in the embodiments of this application may be used in electric apparatuses using batteries as power sources or various energy storage systems using batteries as energy storage elements. The electric apparatuses may be, but is not limited to, a mobile phone, tablet, laptop, electric toy, electric tool, electric bicycle, electric vehicle, ship, spacecraft, and the like. Electric toys may include fixed or mobile electric toys, such as game consoles, electric car toys, electric ship toys, and electric airplane toys, and spacecraft may include airplanes, rockets, space shuttles, and spaceships.

For convenience of description, in the following embodiments, for example, an electric apparatus according to an embodiment of this application is a vehicle 1.

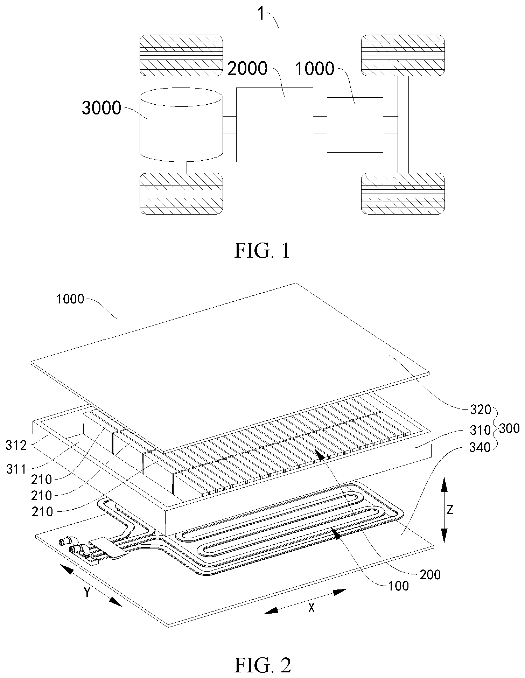

Refer to FIG. 1. FIG. 1 is a schematic diagram of a vehicle 1 provided in some embodiments of this application. The vehicle 1 may be a fuel-powered vehicle, a gas-powered vehicle, or a new energy vehicle, where the new energy vehicle may include battery electric vehicle, hybrid electric vehicle, range-extended electric vehicle, and the like. A battery 1000 is provided inside the vehicle 1, and the battery 1000 may be disposed at a bottom, head, or tail of the vehicle 1. The battery 1000 may be used for power supply of the vehicle 1, for example, the battery 1000 may be an operating power source of the vehicle 1. The vehicle 1 may further include a controller 2000 and a motor 3000, and the controller 2000 is configured to control the battery 1000 to supply power to the motor 3000, for example, for operating power demands during start, navigation, and driving of the vehicle 1.

In some embodiments of this application, the battery 1000 may not only serve as an operating power source of the vehicle 1 but also as a driving power source of the vehicle 1, completely or partially replacing fuel or natural gas to provide driving power for the vehicle 1.

Refer to FIG. 2. FIG. 2 is an exploded view of a battery 1000 provided in some embodiments of this application. The battery 1000 includes a box assembly 300, a battery cell 210, and a heat exchange member 100. The box assembly 300 has an accommodation cavity. The battery cell 210 is accommodated in the accommodation cavity of the box assembly 300. The heat exchange member 100 may be disposed between the battery cell 210 and the box assembly 300 or between adjacent battery cells 210.

The box assembly 300 is configured to provide an accommodation space for the battery cell 210, and the box assembly 300 may be of various structures. In some embodiments, the box assembly 300 may include a first part (for example, a box body 310 described below) and a second part (for example, a box cover 320 described below), where the first part and the second part fit with each other, and the first part and the second part jointly define the accommodation space for accommodating the battery cell 210. The second part may be a hollow structure with one end open, the first part may be a plate-like structure, and the first part covers the open side of the second part so that the first part and the second part jointly define the accommodation space. Alternatively, both the first part and the second part may be hollow structures with one side open, and the open side of the first part covers the open side of the second part. Certainly, the box assembly 300 formed by the first part and the second part may be in various shapes, such as cylinder or cuboid. Optionally, in some embodiments, the box assembly 300 may further include a bottom guard plate 340, where the bottom guard plate 340 is disposed below the box body 310 to further enhance a load-bearing strength and impact resistance of the bottom of the box body 310. A material of the bottom guard plate 340 can vary, including but not limited to copper, iron, aluminum, stainless steel, aluminum alloy, and the like.

In the battery 1000, the battery cell 210 may be provided in plurality, and the plurality of battery cells 210 may be connected in series, parallel, or series-parallel, where a series-parallel connection refers to a combination of series and parallel connections among the plurality of battery cells 210. The plurality of battery cells 210 may be directly connected in series, parallel, or series-parallel, and then an entirety formed by the plurality of battery cells 210 is accommodated in the box assembly 300; certainly, the battery 1000 may alternatively be formed by first connecting the plurality of battery cells 210 in series, parallel, or series-parallel to form battery modules, and then connecting a plurality of battery modules in series, parallel, or series-parallel to form an entirety accommodated in the box assembly 300. The battery 1000 may further include other structures, for example, the battery 1000 may further include bus components for achieving electrical connection among the plurality of battery cells 210.

Each battery cell 210 may be a secondary battery or a primary battery; and may be a lithium-sulfur battery, a sodium-ion battery, or a magnesium-ion battery, but is not limited thereto. The battery cell 210 may be cylindrical, flat, cuboid, or in other shapes.

In the battery 1000, the heat exchange member 100 may be disposed between the plurality of battery cells 210 and a top wall of the box assembly 300, between the plurality of battery cells 210 and a bottom wall of the box assembly 300, between the bottom wall of the box assembly 300 and the bottom guard plate 340, or between two adjacent battery cells 210 to provide heat exchange for the plurality of battery cells 210. In some embodiments, the heat exchange member 100 may include a heat exchange tube 10 and a fluid collector, where the heat exchange tube 10 is connected to the fluid collector, the heat exchange tube 10 may be a flat tube, round tube, harmonica tube, or tube in other shapes, and the fluid collector may be a rectangular tube, round tube, or the like.

With reference to the drawings, the heat exchange tube 10 according to the embodiments of this application is described below.

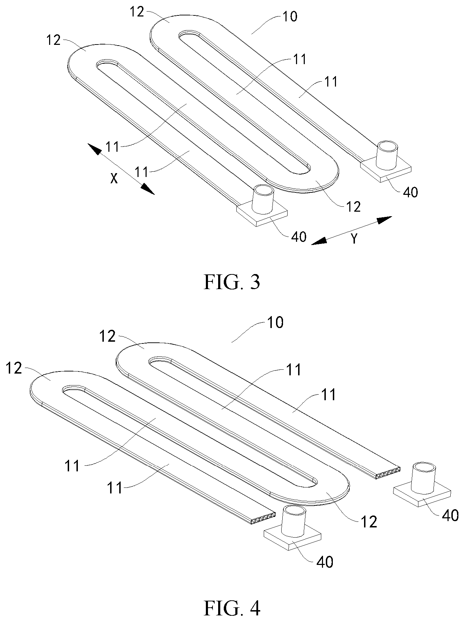

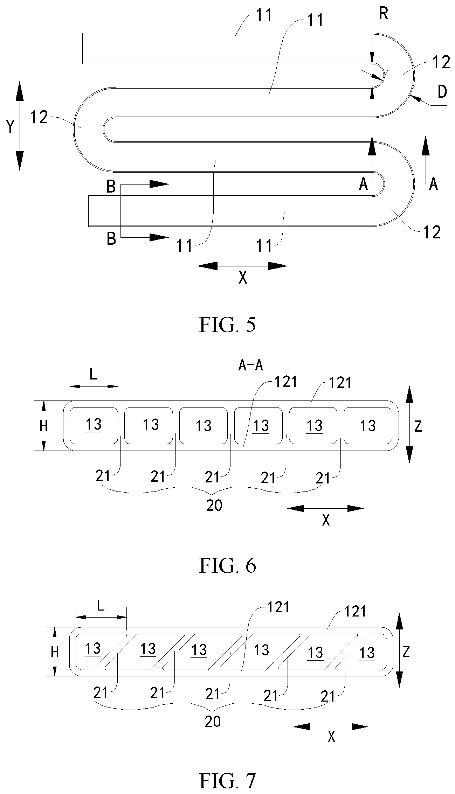

Refer to FIG. 3 to FIG. 9. FIG. 3 and FIG. 4 are schematic structural diagrams of a heat exchange tube 10 provided in some embodiments of this application. FIG. 5 is a schematic structural diagram of a part of the heat exchange tube 10 shown in FIG. 3. FIG. 6 to FIG. 9 are cross-sectional views of a bent section 12 of a heat exchange tube 10 provided in different embodiments of this application. The heat exchange tube 10 includes a plurality of straight heat exchange sections 11 and at least one bent section 12.

Specifically, the plurality of straight heat exchange sections 11 are spaced apart, the at least one bent section 12 sequentially connects and communicates with the plurality of straight heat exchange sections 11, and at least one bent section 12 is provided with a first reinforcement member 20.

The heat exchange tube 10 is a tube structure allowing medium flow and defining a medium flow passage, such as a circular tube, rectangular tube, or elliptical tube. A material of the heat exchange tube 10 may be a material with excellent thermal conductivity, such as metal material, specifically aluminum, copper, and the like. For example, the heat exchange tube 10 may be an aluminum tube. The straight heat exchange section 11 refers to a heat exchange section extending straight, and the bent section 12 refers to a heat exchange section extending along a fold line or curve.

The plurality of straight heat exchange sections 11 being spaced apart and the at least one bent section 12 sequentially connecting and communicating with the plurality of straight heat exchange sections 11 means that channels within the straight heat exchange sections 11 do not directly communicate but indirectly communicate through the bent section 12. Spatially, the straight heat exchange sections 11 may be spaced by a certain gap or contact each other, and both are within the protection scope of this application.

Connecting the straight heat exchange sections 11 via the bent section 12 can achieve direction change of an extension path of the heat exchange tube 10 from an inlet to an outlet, allowing the heat exchange tube 10 to cover a larger area within a certain space, thereby increasing an area for heat exchange with a component requiring heat exchange and improving heat exchange efficiency and temperature uniformity of the component requiring heat exchange.

In the embodiments where the straight heat exchange section 11 is provided in plurality, extension directions of the plurality of straight heat exchange sections 11 may be the same or different, and extension lengths may be the same or different; in embodiments where the bent section 12 is provided in plurality, shapes, bending directions, and bending angles of the plurality of bent sections 12 may be the same or different; and as long as a direction of the extension path of the heat exchange tube 10 can be changed, all are within the protection scope of this application.

In this application, a forming process of the heat exchange tube 10 is not limited, for example, it may be formed by extrusion, or by sheet metal bending and welding fastening. The straight heat exchange sections 11 and the bent section 12 may be integrally formed or separately formed and then joined, and the forming processes of the straight heat exchange sections 11 and the bent section 12 may be the same or different.

The first reinforcement member 20 may be made of a material with certain strength, such as stainless steel, composite material, or multi-layer material. A structure of the first reinforcement member 20 may be flexibly set according to actual conditions, for example, the first reinforcement member 20 may include a plate body fitting with a side wall of the bent section 12; for example, the first reinforcement member 20 may include a rib connecting two opposite side walls.

At least one bent section 12 is provided with the first reinforcement member 20. In the embodiments where there is one bent section 12, the bent section 12 is provided with the first reinforcement member 20; in embodiments where there are a plurality of bent sections 12, one bent section 12 may be provided with the first reinforcement member 20, or a plurality or all bent sections 12 may be provided with the first reinforcement member 20.

During the bending formation process of the bent section 12, a region near an inner bending edge (such as a side closer to the center of a circular arc-shaped bent section 12) experience material accumulation and is prone to wrinkling or even collapse, reducing a flow area inside the bent section 12 and a structural strength of the bent section 12; and a region near an outer bending edge (such as a side farther from the center of a circular arc-shaped bent section 12) experience stretching and thinning, easily reducing compression resistance and corrosion resistance of the outer wall edge, and easily causing the flow space inside the bent section 12 to flatten, increasing flow resistance.

In this application, the first reinforcement member 20 can reinforce the structural strength of the bent section 12, so that the bent section 12 is less prone to defects such as large-area wrinkling, deformation, collapse, or thinning during the bending formation process, providing the bent section 12 with better compression resistance and corrosion resistance; and during heat exchange application of the heat exchange tube 10, the first reinforcement member 20 can further improve the overall compression resistance of the heat exchange tube 10, enhancing the overall structural strength and service life of the heat exchange tube 10. In addition, after reducing defects such as wrinkling, deformation, and collapse of the bent section 12, a contact area between the heat exchange tube 10 and a component requiring heat exchange increases, such as the battery 1000, improving a heat exchange area and heat exchange effect, and enhancing reliability of the battery 1000.

For example, in a specific example of this application, in the heat exchange tube 10, a plurality of bent sections 12 sequentially connect and communicate with a plurality of straight heat exchange tubes 10, where a radial width of the bent section 12 is 23 mm, a thickness perpendicular to the radial direction is 6 mm, and the bent section 12 is provided with the first reinforcement member 20. In a comparative example differing from this example, the bent section 12 is not provided with the first reinforcement member 20. Tests show that the heat exchange tube 10 in the comparative example withstands 200 kPa, while the heat exchange tube 10 in this embodiment withstands 2000 kPa. Providing the first reinforcement member 20 greatly improves the pressure resistance of the heat exchange tube 10.

For the heat exchange tube 10 in the embodiments of this application, the bent section 12 sequentially connects and communicates with the plurality of straight heat exchange sections 11 and the first reinforcement member 20 is provided within the bent section 12, reducing defects such as collapse, wrinkling, and excessive thinning during the formation of the bent section 12, enhancing the structural strength of the bent section 12, and improving pressure resistance during heat exchange application of the heat exchange tube 10. This helps prolong a service life. In addition, since defects are reduced, the contact area for heat exchange between the heat exchange tube 10 and the component requiring heat exchange can increase, improving heat exchange efficiency.

According to some embodiments of this application, each bent section 12 is provided with the first reinforcement member 20. This ensures that each bent section 12 is less prone to defects such as large-area wrinkling or collapse during the bending formation, better improving overall pressure resistance and heat exchange area of the heat exchange tube 10.

According to some embodiments of this application, as shown in FIG. 6 to FIG. 9, the bent section 12 includes two wall surfaces 121 disposed opposite each other, and the first reinforcement member 20 connects the wall surfaces 121 of two opposite sides. This can improve the positional stability of the first reinforcement member 20 within the bent section 12, making it less prone to displacement during the bending process or heat exchange application, which affects the structural reinforcement effect.

In some specific embodiments, at least one wall surface 121 connected to the first reinforcement member 20 faces the component requiring heat exchange, allowing the heat exchange tube 10 to provide certain support during heat exchange with the component requiring heat exchange, further improving structural stability of the heat exchange tube 10.

In some specific embodiments, as shown in FIG. 6 to FIG. 9, the wall surface 121 is planar. A planar surface helps increase the heat exchange area between the heat exchange tube 10 and the component requiring heat exchange, improving heat exchange efficiency, and facilitating connection between the first reinforcement member 20 and the wall surface 121 to reduce connection difficulty. It should be noted that due to factors such as processing techniques, the wall surface 121 of the produced heat exchange tube 10 is not absolutely planar, and may have negligible defects such as certain deformation, pits, or small protrusions.

According to some embodiments of this application, as shown in FIG. 6 to FIG. 9, the first reinforcement member 20 includes a plurality of first reinforcement ribs 21. The plurality of first reinforcement ribs 21 are spaced apart along a bending radius direction of the bent section 12 and divide a heat exchange flow passage within the bent section 12 into a plurality of secondary flow passages 13. During bending, a region near the inner edge of the bent section 12 is prone to wrinkling, and the wrinkling can be sequentially blocked radially outward by the plurality of first reinforcement ribs 21. In this case, from the inside out, an inner side of the 1st first reinforcement rib 21 experiences the most severe wrinkling (but less severe than wrinkling in a case where the first reinforcement member 20 is not provided), slight wrinkling occurs between the 1st and 2nd first reinforcement ribs 21, and almost no wrinkling occurs between the 2nd and 3rd first reinforcement ribs 21. In this way, the plurality of first reinforcement ribs 21 spaced apart in a radial direction can significantly reduce a wrinkling area and provide effective support to the bent section 12 in different radial regions, reducing a possibility of thinning of a sheet material radially near the outer edge region, thereby greatly improving the structural strength of the bent section 12 and reducing risks of collapse, deformation, and cracking.

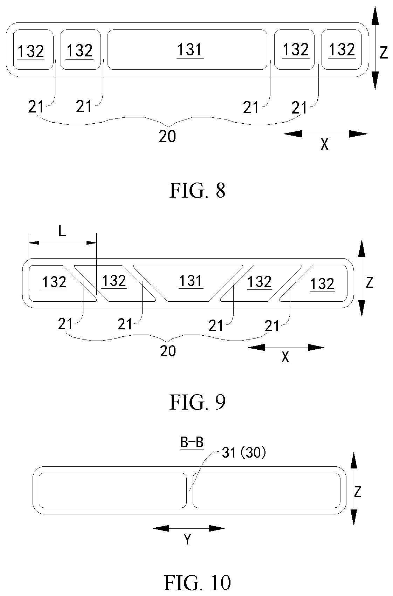

In some embodiments, as shown in FIG. 6 and FIG. 8, the first reinforcement rib 21 extends perpendicular to the wall surface 121, for example, the first reinforcement rib 21 extends along an up-down direction (third direction Z as shown in FIG. 6). The first reinforcement rib 21 is perpendicular to the wall surface 121. This results in a smaller height of the first reinforcement rib 21, occupying less space. This helps reduce the flow resistance. In addition, the first reinforcement rib 21 provides better support to the wall surface 121 in a height direction.

In some embodiments, as shown in FIG. 7 and FIG. 9, the first reinforcement rib 21 extends obliquely relative to the wall surface 121. Thus, widths along the radial direction of at least one of upper side walls and lower side walls of the secondary flow passages 13 at the radially innermost end and the radially outermost end can be reduced, to enhance support to the wall surfaces 121 by the two first reinforcement ribs 21 at the radially innermost end and the radially outermost end. For example, as shown in FIG. 7, the first reinforcement ribs 21 incline downward and forward, reducing a width of a lower side wall of the secondary flow passage 13 at the radially innermost end to enhance support; and an upper side wall has a larger width, so that a material accumulation space can be increased and excessive material accumulation can be reduced after compression and wrinkling, which affects the blocking effect of the first reinforcement ribs 21. The width of the upper side wall of the secondary flow passage 13 at the radially outermost end is reduced to enhance support for a thinned region, and the lower side wall has a larger width to reduce the flow resistance.

In some embodiments, as shown in FIG. 7, the plurality of first reinforcement ribs 21 incline in a same direction, helping reduce the formation difficulty of the plurality of first reinforcement ribs 21.

In some embodiments, as shown in FIG. 9, in the bending radius direction of the bent section 12, the first reinforcement ribs 21 on two sides of a midpoint of the bent section 12 incline in opposite directions, and the first reinforcement ribs 21 on a same side of the midpoint of the bent section 12 incline in a same direction. In this way, two first reinforcement ribs 21 adjacent to the midpoint of the bent section 12 cooperate with the wall surfaces 121 of the two sides to form a trapezoidal or arch-like structure. This helps improve compression resistance near the midpoint of the bent section 12, and therefore the bent section 12 is less prone to deformation. In addition, with a fixed width of the bent section 12, this helps reduce a quantity of required first reinforcement ribs 21, thereby reducing overall flow resistance.

In addition, in some specific embodiments, as shown in FIG. 9, the two side wall surfaces 121 include a first wall surface facing the component requiring heat exchange and a second wall surface facing away from the component requiring heat exchange, and in a direction from the first wall surface to the second wall surface, the first reinforcement ribs 21 incline near the midpoint of the bent section 12. In other words, an end with a larger spacing between the two first reinforcement ribs 21 (an upper end as shown in FIG. 9) is closer to the component requiring heat exchange, and an end with a smaller spacing is farther from the component requiring heat exchange. This helps increase a heat exchange area between the middle secondary flow passage 13 and the component requiring heat exchange, improving heat exchange effect.

According to some embodiments of this application, as shown in FIG. 6 and FIG. 7, the plurality of first reinforcement ribs 21 are arranged at an equal interval, helping reduce the formation difficulty of the plurality of first reinforcement ribs 21 and improve uniformity of the flow resistance of the different secondary flow passages 13.

According to some embodiments of this application, as shown in FIG. 8 and FIG. 9, in the bending radius direction of the bent section 12, a width of a secondary flow passage 13 near the middle is greater than a width of a secondary flow passage 13 near the edge. In other words, first reinforcement ribs 21 near the edge are denser than first reinforcement ribs 21 near the middle. For example, widths gradually decrease from the middle secondary flow passage 13 to the outermost secondary flow passage 13; or a width of the middle secondary flow passage 13 is greater than widths of all other secondary flow passages 13; or a width of the outermost secondary flow passage 13 is smaller than widths of all other secondary flow passages 13. All are within the protection scope of this application.

During bending of the bent section 12, regions near the inner and outer edges are more prone to defects such as wrinkling, deformation, and thinning. Providing denser first reinforcement ribs 21 in the region near the edge helps improve the structural reinforcement effect on the bent section 12 and enhance compression resistance. Providing sparser first reinforcement ribs 21 in a region near the middle can reduce a quantity of required first reinforcement ribs 21, decrease a space occupied by the first reinforcement member 20 within the bent section 12, reduce overall flow resistance within the bent section 12, and improve heat exchange effect.

According to some embodiments of this application, as shown in FIG. 5, the inner-edge bending diameter of the bent section 12 is R, the width of the bent section 12 along the bending radius direction is D, and R is greater than or equal to D. An excessively small inner-edge bending diameter of the bent section 12 leads to excessive material accumulation in the region near the inner edge and excessive thinning of the region near the outer edge, which places high demands on the first reinforcement member 20, for example, excessive first reinforcement ribs 21 are required, severely reducing flow resistance. Within the above ratio range, the strength of the bent section 12 can be reinforced by the first reinforcement member 20 without causing excessive flow resistance, ensuring both the service life and heat exchange capacity.

In addition, an excessively large inner-edge bending diameter of the bent section 12 leads to an excessively small area covered by the heat exchange tube 10 within a certain space, resulting in an excessively small heat exchange area causing reduced heat exchange capacity. Therefore, in some embodiments, as shown in FIG. 5 and FIG. 8, the inner-edge bending diameter of the bent section 12 is R, a width of the bent section 12 along the bending radius direction is D, and R/D is 1 to 3, improving structural reinforcement effect and satisfying heat exchange capacity requirements. For example, in some specific embodiments, R/D is 1, 1.5, 2, 2.5, 3, or the like.

In addition, in the bending radius direction of the bent section 12, the secondary flow passage 13 in the middle is a first secondary flow passage 131; a plurality of second secondary flow passages 132 are provided on two sides of the first secondary flow passage 131, the plurality of second secondary flow passages 132 have an equal width, and a width of the first secondary flow passage 131 is greater than the width of the second secondary flow passage 132.

The larger width of the first secondary flow passage 131 reduces the quantity of required first reinforcement ribs 21 and lowers the flow resistance; the plurality of narrower second secondary flow passages 132 can effectively prevent defects such as wrinkling and thinning at the inner and outer edges from spreading toward the middle, reducing defects and confining defects within a relatively small radial range, effectively improving the compression resistance and heat exchange capacity.

In some embodiments of this application, as shown in FIG. 6 to FIG. 9, a maximum width of at least two secondary flow passages 13 near the edge is L, a thickness of the bent section 12 in a direction perpendicular to a bending plane (the third direction Z as shown in FIG. 6, that is, up-down direction) is H, and H/L is 0.2 to 3. An excessively small H/L leads to an excessively large spacing of the first reinforcement ribs 21, increasing wrinkling, or an excessively small thickness of the secondary flow passages 13 and excessively large flow resistance. An excessively large H/L leads to overly dense first reinforcement ribs 21 and excessively large flow resistance. Within the above ratio range, wrinkling and collapse are alleviated while the flow resistance is reduced.

In some embodiments, H/L may be 0.8 to 1.2, further improving structural reinforcement effect, alleviating wrinkling and collapse, and reducing the flow resistance. For example, in some specific embodiments, H/L may be 0.8, 1.9, 1.0, 1.1, 1.2, or the like. When H/L equals 1, a cross-section of the secondary flow passage 13 is nearly square, with more uniform stress and more uniform thinning and thickening.

In some embodiments of this application, as shown in FIG. 6 to FIG. 9, the plurality of first reinforcement ribs 21 are arranged symmetrically or centrally symmetrically with respect to the midpoint of the bent section 12. This improves uniformity of forces on two sides of the midpoint in the radial direction of the bent section 12, so that thinning and thickening are more uniform. In addition, during production, a tube body may be bent clockwise or counterclockwise, in other words, either of two edges in a width direction of the tube body may be formed as the inner edge of the bent section 12. This helps improve production efficiency.

According to some embodiments of this application, FIG. 10 shows a cross-sectional view of a straight heat exchange section 11 of the heat exchange tube 10 provided in an embodiment of this application, with a second reinforcement member 30 provided within the straight heat exchange section 11. The second reinforcement member 30 can improve a structural strength of the straight heat exchange section 11 to further enhance the overall strength of the heat exchange tube 10 and improve pressure resistance.

In some embodiments, with continued reference to FIG. 10, the second reinforcement member 30 includes one second reinforcement rib 31. The second reinforcement rib 31 is disposed in the middle of the straight heat exchange section 11 in a width direction of the straight heat exchange section 11. Since the straight heat exchange section 11 does not require bending and has no wrinkling or collapse issues caused by bending, providing fewer second reinforcement ribs 31 can satisfy strength requirements while reducing flow resistance for the heat exchange medium within the straight heat exchange section 11. This helps improve heat exchange effect.

In other embodiments, the first reinforcement member 20 includes the plurality of first reinforcement ribs 21 spaced apart along the bending radius direction of the bent section 12, the second reinforcement member 30 includes a plurality of second reinforcement ribs 31, and the second reinforcement ribs 31 are connected to the first reinforcement ribs 21 in one-to-one correspondence. Thus, the heat exchange medium in the plurality of secondary flow passages 13 within the bent section 12 can smoothly flow into the straight heat exchange section 11 under the guidance of the first reinforcement ribs 21 and the second reinforcement ribs 31. In embodiments where the straight heat exchange section 11 and the bent section 12 are integrally formed, the first reinforcement ribs 21 and the connected second reinforcement ribs 31 can be integrally formed, in other words, the single heat exchange tube 10 may be bent to create the straight heat exchange section 11 and bent section 12. In this way, lengths of each straight heat exchange section 11 and bent section 12 are more flexible without being restricted by the internal first reinforcement ribs 21 and second reinforcement ribs 31. This helps improve production efficiency.

In some embodiments of this application, as shown in FIG. 3 to FIG. 5, the heat exchange tube 10 is formed by bending a single tube, eliminating assembly processes between the straight heat exchange section 11 and the bent section 12, improving production efficiency. Further, since joining and sealing are not required, a risk of sealing failure is reduced. In addition, in some embodiments where both the first reinforcement member 20 and the second reinforcement member 30 are provided, cross-sectional shapes of the first reinforcement member 20 and the second reinforcement member 30 perpendicular to an extension path of the heat exchange tube 10 may be the same to facilitate bending formation of the first reinforcement member 20 and the second reinforcement member 30, reducing processing difficulty of the heat exchange tube 10.

In other embodiments of this application, each straight heat exchange section 11 may be independently formed by a single tube, each bent section 12 may be formed by bending a single tube, and the straight heat exchange section 11 and bent section 12 are joined and sealed, for example, by a sleeve fitted over ends of the straight heat exchange section 11 and bent sections12 to achieve connection, improving sealing reliability, where sleeve mounting is not interfered by the first reinforcement structure, and the reinforcement structures within the separate straight heat exchange section 11 and bent section 12 do not interfere with each other, allowing identical or different configurations for more flexible settings.

In some embodiments, as shown in FIG. 3 and FIG. 6, the heat exchange tube 10 is a flat tube. In other words, in at least two directions perpendicular to the extension path of the heat exchange tube 10, dimensions of the heat exchange tube 10 are different. For example, as shown in FIG. 6, a thickness of the heat exchange tube 10 in the up-down direction is smaller than a width in a horizontal direction. In this case, the heat exchange tube 10 is a flat tube.

In some embodiments of this application, as shown in FIG. 6 to FIG. 9, the bent section 12 and the first reinforcement member 20 are integrally formed, for example, formed by extrusion. Integral formation eliminates the assembly process of mounting the first reinforcement member 20 in the small space within the bent section 12, improving production efficiency; and ensures reliable connection between the first reinforcement member 20 and the bent section 12, so that relative movement is less likely during the bending formation process, which affects the reinforcement effect.

According to some embodiments of this application, as shown in FIG. 1 to FIG. 5, the straight heat exchange section 11 extends along a first direction X (for example, a front-rear direction shown in FIG. 5); a plurality of straight heat exchange sections 11 are spaced apart along a second direction Y (for example, a left-right direction shown in FIG. 5); the first direction X is perpendicular to the second direction Y; and the bent section 12 is connected to two straight heat exchange sections 11 that are spaced apart, and the bent section 12 is semi-circular arc-shaped. The orderly arrangement of the plurality of straight heat exchange sections 11 helps increase occupied space in the first direction X and the second direction Y, thereby increasing the heat exchange area and improving heat exchange capacity.

In a specific embodiment, as shown in FIG. 5, among any three adjacent straight heat exchange sections 11 along the second direction Y, a first end of a middle straight heat exchange section 11 is connected to a first end of one adjacent straight heat exchange section 11 via a bent section 12, and a second end of the middle straight heat exchange section 11 is connected to a second end of the other adjacent straight heat exchange section 11 via a bent section 12.

Thus, from one end to the other end in the second direction Y, the entire heat exchange tube 10 is formed as a serpentine tube reciprocating along the first direction X, better increasing the heat exchange area. In addition, specifications of the required straight heat exchange sections 11 and bent sections 12 are relatively uniform, and each bent section 12 is less prone to interference from the positions of other straight heat exchange sections 11 and bent sections 12 during bending, improving production efficiency.

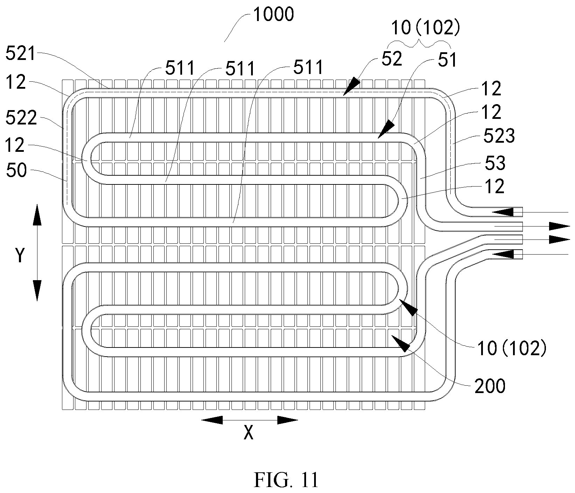

FIG. 11 is a schematic structural diagram of a part of a battery 1000 provided in some embodiments of this application. According to some embodiments of this application, as shown in FIG. 11, at least two straight heat exchange sections 11 extend at an angle, and the bent section 12 is arc-shaped and connects the two straight heat exchange sections 11 extending at an angle. By changing a bending angle of the bent section 12, an angle between two adjacent straight heat exchange sections 11 can be changed, and therefore an extension path of the heat exchange tube 10 is more flexible. For example, the bending angle of the bent section 12 is 90°, and the corresponding connected two straight heat exchange sections 11 may be parallel to each other.

According to some embodiments of this application, as shown in FIG. 11, the heat exchange tube 10 includes a first heat exchange tube 102. The first heat exchange tube 102 includes a first heat exchange flow passage 51 and a second heat exchange flow passage 52. The second heat exchange flow passage 52 is bent to form a U-shaped region 50. The first heat exchange flow passage 51 is bent and disposed within the U-shaped region 50, and is bent and connected to the second heat exchange flow passage 52, for example, via the bent section 12.

Specifically, the battery 1000 may include a plurality of battery cells 210, and the first heat exchange tube 102 is configured to exchange heat with the plurality of battery cells 210 of the battery 1000, limiting a temperature of the battery 1000 within a safe operating temperature range and improving operating reliability of the battery 1000.

The above description "The second heat exchange flow passage 52 is bent to form a U-shaped region 50. The first heat exchange flow passage 51 is bent and disposed within the U-shaped region 50" aims to illustrate that the second heat exchange flow passage 52 is disposed around a periphery of the first heat exchange flow passage 51 and can be arranged on three peripheral sides of the first heat exchange flow passage 51, and the second heat exchange flow passage 52 is closer to a periphery of the battery 1000 than the first heat exchange flow passage 51.

The second heat exchange flow passage 52 is bent to form a U-shaped region 50, in other words, in a direction from one end to another end of the second heat exchange flow passage 52, the second heat exchange flow passage 52 extends along a U-shaped line to form the U-shaped region 50.

The first heat exchange flow passage 51 is bent and disposed within the U-shaped region 50, in other words, the first heat exchange flow passage 51 is arranged in a space enclosed by the second heat exchange flow passage 52, and the first heat exchange flow passage 51 extends non-linearly on an inner side of the second heat exchange flow passage 52, having at least one bend.

It should be noted that in this embodiment, the first heat exchange flow passage 51 is only limited to be bent and disposed within the U-shaped region 50, and a bending form of the first heat exchange flow passage 51 is not limited, in other words, the specific bending form of the first heat exchange flow passage 51 may be designed according to the heat exchange requirements of the battery 1000. For example, the first heat exchange flow passage 51 may extend along a length direction of the battery cell 210 (that is, a second direction Y in FIG. 11) and bend toward a width direction of the battery cell 210 (that is, a first direction X in FIG. 11) after extending to a certain length, then continue extending along the length direction of the battery cell 210 and bend along the width direction; or the first heat exchange flow passage 51 may extend along the width direction of the battery cell 210 and bend toward the length direction of the battery cell 210 after extending to a certain length, and then continue extending along the width direction of the battery cell 210 and bend along the length direction.

The first heat exchange flow passage 51 and the second heat exchange flow passage 52 are connected via a bend, in other words, one end of the first heat exchange flow passage 51 is connected to one end of the second heat exchange flow passage 52, and a connection position between the first heat exchange flow passage 51 and the second heat exchange flow passage 52 is a non-linear bent structure. For example, the connection position between the first heat exchange flow passage 51 and the second heat exchange flow passage 52 may be bent into an arc segment.

The first heat exchange flow passage 51 and the second heat exchange flow passage 52 are connected, so that one of an end of the first heat exchange flow passage 51 away from the second heat exchange flow passage 52 and an end of the second heat exchange flow passage 52 away from the first heat exchange flow passage 51 may serve as a liquid inlet end and the other as a liquid outlet end, so that when the first heat exchange tube 102 performs heat exchange, the heat exchange medium may flow from the first heat exchange flow passage 51 to the second heat exchange flow passage 52 or from the second heat exchange flow passage 52 to the first heat exchange flow passage 51.

It can be understood that during the flow of the heat exchange medium in the first heat exchange tube 102, a temperature of the heat exchange medium gradually changes, leading to gradual decrease in heat exchange effect. For example, when the heat exchange tube 10 cools and dissipates heat from a battery assembly 200, heat from the battery cell 210 gradually transfers to the heat exchange medium, causing the temperature of the heat exchange medium to gradually increase during flow along the first heat exchange tube 102, gradually reducing a temperature difference with the battery cell 210 and gradually decreasing heat exchange efficiency; when the heat exchange tube 10 heats the battery assembly 200, heat from the heat exchange medium gradually transfers to the battery cell 210, causing the temperature of the heat exchange medium to gradually decrease during flow along the first heat exchange tube 102, gradually reducing the temperature difference with the battery cell 210 and gradually decreasing heat exchange efficiency.

In these embodiments, when the heat exchange tube 10 cools and dissipates heat from the battery assembly 200, the heat exchange medium may flow from the first heat exchange flow passage 51 to the second heat exchange flow passage 52, but may alternatively flow from the second heat exchange flow passage 52 to the first heat exchange flow passage 51. When the heat exchange medium flows from the first heat exchange flow passage 51 to the second heat exchange flow passage 52, it may first cool the battery cell 210 at the middle of the battery 1000 (that is, an internal battery cell 210 on the inner side of the periphery), and then cool a battery cell 210 along the periphery of the battery 1000. Since the heat dissipation of the battery cell 210 along the periphery of the battery 1000 is better than that of the internal battery cell 210, the heat exchange medium with a lower temperature in the first heat exchange flow passage 51 can better satisfy the heat dissipation needs of the battery cell 210 at the middle of the battery 1000; in addition, since the battery cell 210 along the periphery can naturally dissipate heat directly to the external environment, when a temperature of the heat exchange medium in the second heat exchange flow passage 52 is slightly higher, the heat dissipation needs of the peripheral battery cell 210 can still be satisfied. In this way, the cooling effect on the battery cell 210 along the periphery of the battery 1000 and that on the battery cell 210 at the middle of the battery 1000 are substantially consistent, and therefore the temperatures of the battery cell 210 along the periphery of the battery 1000 and the battery cell 210 at the middle of the battery 1000 after cooling and heat dissipation are relatively consistent, improving uniformity of the temperature distribution within the battery 1000.

When the heat exchange tube 10 heats the battery assembly 200, the heat exchange medium may flow from the first heat exchange flow passage 51 to the second heat exchange flow passage 52, but may alternatively flow from the second heat exchange flow passage 52 to the first heat exchange flow passage 51. For example, when the heat exchange medium flows from the second heat exchange flow passage 52 to the first heat exchange flow passage 51, it may first heat a peripheral battery cell 210 of the battery assembly 200, and the heat exchange medium then heats a battery cell 210 at the middle of the battery assembly 200. Since the peripheral battery cell 210 of the battery 1000 dissipates more heat to the external environment and a temperature of the peripheral battery cell 210 of the battery 1000 is more likely to drop, the heat exchange medium first heats the peripheral battery cell 210 of the battery 1000. The heat exchange medium with a relatively high temperature can raise the temperature of the peripheral battery cell 210 while compensating for the heat lost due to dissipation of the battery cell 210 to the external environment, satisfying its heating needs. The battery cell 210 at the middle of the battery assembly 200 has a smaller area for contact with the external environment, and therefore experiences less heat loss. The heat exchange medium with a lower temperature flowing in the first heat exchange flow passage 51 and the heat generated by the battery cell 210 together satisfy its heating needs. In this way, the heating effect on the peripheral battery cell 210 of the battery 1000 and that on the battery cell 210 at the middle of the battery assembly 200 are substantially consistent, and therefore the temperatures of the peripheral battery cell 210 of the battery 1000 and the battery cell 210 at the middle of the battery assembly 200 after heating and temperature rise are relatively consistent, improving uniformity of the temperature distribution within the battery 1000.

In the above embodiment, by bending the second heat exchange flow passage 52 to form the U-shaped region 50 and bending the first heat exchange flow passage 51 within the U-shaped region 50, when the heat exchange tube 10 exchanges heat with the battery assembly 200, the U-shaped region 50 formed by the peripheral second heat exchange flow passage 52 can be positioned opposite the peripheral battery cell 210 of the battery, and the first heat exchange flow passage 51 within the U-shaped region 50 may be positioned opposite the internal battery cell 210, allowing the heat exchange tube 10 to compensate for the internal-external temperature difference caused by heat exchange between the peripheral battery cell 210 and the environment. In this way, the heat exchange effect on the peripheral battery cell 210 of the battery assembly 200 and that on the internal battery cell 210 of the battery assembly 200 are substantially consistent, improving temperature uniformity of the battery 1000, thereby prolonging a service life of the battery 1000 to a certain extent.

According to some embodiments of this application, as shown in FIG. 11, the first heat exchange flow passage 51 may include a plurality of first heat exchange portions 511, and the plurality of first heat exchange portions 511 are spaced apart and are sequentially bent and connected.

To be specific, the plurality of first heat exchange portions 511 are sequentially connected, and a connection position between two connected first heat exchange portions 511 is bent. For example, two connected first heat exchange portions 511 may be connected via the bent section 12. There may be two, three, four, five, or more first heat exchange portions 511.

It should be noted that a shape of the first heat exchange portion 511 may vary, for example, the first heat exchange portion 511 may be linear or arc-shaped; an extension direction of the first heat exchange portion 511 may also vary, for example, extending along a length direction or thickness direction of the battery cell 210. Thus, the plurality of first heat exchange portions 511 sequentially bent and connected may form heat exchange flow passages that are S-shaped, zigzag, V-shaped, or the like.

In the above embodiments, providing the plurality of first heat exchange portions 511 can increase the heat exchange area of the first heat exchange flow passage 51, thereby increasing the heat exchange area of the first heat exchange tube 102 and improving the heat exchange effect of the first heat exchange tube 102; further, since internal battery cells 210 are surrounded by external battery cells 210 and the internal battery cells 210 has small temperature differences among themselves, providing the plurality of first heat exchange portions 511 can improve overall heat exchange effect while a temperature difference between internal and external battery cells 210 is reduced.

According to some embodiments of this application, as shown in FIG. 11, the plurality of first heat exchange portions 511 are spaced apart along the second direction Y, and each first heat exchange portion 511 extends linearly along the first direction X, where the first direction X is at an angle to the second direction Y.

The description "the first direction X is at an angle to the second direction Y" aims to illustrate that the first direction X and the second direction Y may be perpendicular or intersect non-perpendicularly, for example, the first direction X and the second direction Y may be arranged at angles of 30°, 60°, 80°, 120°, 150°, or 170°. For example, as shown in FIG. 11, the first direction X is the thickness direction of the battery cell 210, the second direction Y is the length direction of the battery cell 210, the first heat exchange portions 511 extend along the thickness direction of the battery cell 210 and are spaced apart along the length direction of the battery cell 210. In this way, the plurality of bent and connected first heat exchange portions 511 can form an S-shaped heat exchange flow passage, achieving heat exchange for a plurality of battery cells 210.

In the above embodiment, the first heat exchange portions 511 extend linearly along the first direction X, so that the production difficulty of the first heat exchange portions 511 can be reduced, thereby reducing the production complexity of the first heat exchange tube 102. Further, using straight tubes can increase a flow speed of the heat exchange medium, thereby improving the heat exchange effect of the first heat exchange tube 102.

According to some embodiments of this application, as shown in FIG. 11, the second heat exchange flow passage 52 may include: a second heat exchange portion 521, a third heat exchange portion 522, and a fourth heat exchange portion 523; the second heat exchange portion 521 extends along a first side periphery of the first heat exchange flow passage 51; the third heat exchange portion 522 is connected between the second heat exchange portion 521 and the first heat exchange flow passage 51 and extends along a second side periphery of the first heat exchange flow passage 51; a first end of the third heat exchange portion 522 is connected to the second heat exchange portion 521 at an angle and a second end of the third heat exchange portion 522 is connected to the first heat exchange flow passage 51 at an angle; the fourth heat exchange portion 523 communicates with the second heat exchange portion 521, is connected to the second heat exchange portion 521at an angle, and extends along a third side periphery of the first heat exchange flow passage 51.

It can be understood that the fourth heat exchange portion 523 is connected to an end of the second heat exchange portion 521 away from the third heat exchange portion 522; the fourth heat exchange portion 523, the second heat exchange portion 521, and the third heat exchange portion 522 are sequentially connected to form the U-shaped region 50; and the first heat exchange flow passage 51 is disposed within the U-shaped region 50 and connected to an end of the third heat exchange portion 522 away from the second heat exchange portion 521.

The first end of the third heat exchange portion 522 is connected to the second heat exchange portion 521 at an angle, in other words, the third heat exchange portion 522 is connected to the second heat exchange portion 521 and the third heat exchange portion 522 is not collinear or parallel with the second heat exchange portion 521 but arranged at an angle greater than 0° and less than 180°. For example, the third heat exchange portion 522 is connected to the second heat exchange portion 521 at an angle of 30°, 45°, 60°, 90°, 120°, 135°, 150°, or the like.

The second end of the third heat exchange portion 522 is connected to the first heat exchange flow passage 51 at an angle, in other words, the second end of the third heat exchange portion 522 is connected to the second heat exchange portion 521 and the second end of the third heat exchange portion 522 and the first heat exchange flow passage 51 are arranged at an angle greater than 0° and less than 180°. For example, the second end of the third heat exchange portion 522 is connected to the first heat exchange flow passage 51 at an angle of 30°, 45°, 60°, 90°, 120°, 135°, 150°, or the like.

The fourth heat exchange portion 523 communicates with the second heat exchange portion 521 and is connected to the second heat exchange portion 521 at an angle, in other words, the fourth heat exchange portion 523 and the second heat exchange portion 521 are connected and arranged at an angle greater than 0° and less than 180°. For example, the fourth heat exchange portion 523 and the second heat exchange portion 521 are connected at an angle of 30°, 45°, 60°, 90°, 120°, 135°, 150°, or the like.

It should be noted that in this embodiment, the second heat exchange flow passage 52 is limited to be disposed on three peripheral sides of the first heat exchange flow passage 51 and the specific positions of the second heat exchange portion 521, the third heat exchange portion 522, and the fourth heat exchange portion 523 relative to the first heat exchange flow passage 51 are not limited. Thus, the specific positions of the second heat exchange portion 521, the third heat exchange portion 522, and the fourth heat exchange portion 523 may be designed according to actual conditions. For example, if the second heat exchange portion 521 is disposed on a side of the first heat exchange flow passage 51 in the second direction Y, the third heat exchange portion 522 and the fourth heat exchange portion 523 are disposed on two sides of the first heat exchange flow passage 51 in the first direction X respectively; if the second heat exchange portion 521 is disposed on one side of the first heat exchange flow passage 51 in the first direction X, the third heat exchange portion 522 and the fourth heat exchange portion 523 are disposed on two sides of the first heat exchange flow passage 51 in the second direction Y respectively.

In the above embodiment, arranging the second heat exchange portion 521, the third heat exchange portion 522, and the fourth heat exchange portion 523 on three sides of the first heat exchange flow passage 51 respectively allows the second heat exchange flow passage 52 to surround the first heat exchange flow passage 51, and therefore, the first heat exchange tube 102 is arranged more compactly, achieving structural miniaturization of the first heat exchange tube 102. This helps improve a volumetric energy density of the battery 1000, while also simplifying the structure of the first heat exchange tube 102 and facilitating processing and production of the heat exchange tube 10.

According to some embodiments of this application, as shown in FIG. 11, the first heat exchange tube 102 may further include a third heat exchange flow passage 53. The first heat exchange flow passage 51 is connected between the third heat exchange flow passage 53 and the second heat exchange flow passage 52, and the third heat exchange flow passage 53 is connected to the first heat exchange flow passage 51 at an angle.

That is, in the first heat exchange tube 102, the second heat exchange flow passage 52, the first heat exchange flow passage 51, and the third heat exchange flow passage 53 are sequentially connected, and the heat exchange medium may flow from the second heat exchange flow passage 52 via the first heat exchange flow passage 51 to the third heat exchange flow passage 53 or from the third heat exchange flow passage 53 via the first heat exchange flow passage 51 to the second heat exchange flow passage 52.

The third heat exchange flow passage 53 is connected to the first heat exchange flow passage 51 and arranged at an angle greater than 0° and less than or equal to 180°. For example, the angle between the third heat exchange flow passage 53 and the first heat exchange flow passage 51 may be 30°, 45°, 60°, 90°, 120°, 135°, 150°, or the like.

In the above embodiment, providing the third heat exchange flow passage 53 can further increase the heat exchange area of the first heat exchange tube 102, thereby further improving the heat exchange effect of the first heat exchange tube 102.

According to some embodiments of this application, as shown in FIG. 11, the first heat exchange flow passage 51 includes a plurality of first heat exchange portions 511, where the plurality of first heat exchange portions 511 are sequentially connected in the second direction Y; the third heat exchange flow passage 53 is disposed on a side of the first heat exchange flow passage 51 facing away from the third heat exchange portion 522, and the third heat exchange flow passage 53 is connected to one of the plurality of first heat exchange portions 511 that is closest to the second heat exchange portion 521 along the second direction Y.

Specifically, the third heat exchange flow passage 53 is disposed adjacent to the fourth heat exchange portion 523 and between the fourth heat exchange portion 523 and the first heat exchange portions 511, so that the third heat exchange flow passage 53 is also disposed on the outer peripheral side of the first heat exchange flow passage 51. This can increase the peripheral heat exchange area of the first heat exchange tube 102, improving heat exchange efficiency at the peripheries of the first heat exchange tube 102.

In addition, the third heat exchange flow passage 53 and the fourth heat exchange portion 523 may be arranged inside and outside on a same side of the first heat exchange flow passage 51, further increasing the heat exchange area at this position and improving heat exchange efficiency. In addition, since the third heat exchange flow passage 53 and the fourth heat exchange portion 523 are located at two ends of the first heat exchange flow passage 51 in the flow direction of the heat exchange medium respectively, the third heat exchange flow passage 53 and the fourth heat exchange portion 523 may exchange heat with a same region of the battery assembly 200, thereby improving temperature uniformity in that region.

Furthermore, the third heat exchange flow passage 53 is connected to one of the plurality of first heat exchange portions 511 that is closest to the second heat exchange portion 521 along the second direction Y, so that during heat exchange with the battery assembly 200, in the first heat exchange tube 102, temperatures of the heat exchange medium in the first heat exchange portion 511 closest to the second heat exchange portion 521 and the heat exchange medium in the third heat exchange flow passage 53, and temperatures of the heat exchange medium in the second heat exchange portion 521 and the fourth heat exchange portion 523, are the relatively highest temperature and lowest temperature in the first heat exchange tube 102 respectively, with temperatures in other portions in between.

Due to the heat dissipation of the battery 1000, an edge temperature of the battery 1000 is lower than a middle temperature. In this case, the second heat exchange portion 521 exchanges heat in a same region with the first heat exchange portion 511 closest to the second heat exchange portion 521, and the third heat exchange flow passage 53 and the fourth heat exchange portion 523 exchange heat in a same region, thereby further improving temperature uniformity within the battery assembly 200, reducing temperature differences in the battery assembly 200, and improving temperature uniformity of the battery assembly 200.

In the above embodiment, adding the third heat exchange flow passage 53 and connecting the third heat exchange flow passage 53 to one of the plurality of first heat exchange portion 511 that is closest to the second heat exchange portion 521 along the second direction Y can increase the heat exchange area, reducing temperature differences in the battery assembly 200, and improving temperature uniformity of the battery assembly 200.

According to some embodiments of this application, as shown in FIG. 11, the third heat exchange flow passage 53 extends along the second direction Y in a direction away from the second heat exchange portion 521, and the first heat exchange portions 511 all extend along the first direction X, where the first direction X and the second direction Y are arranged at an angle.

Specifically, one end of the third heat exchange portion 522 is connected to one of the plurality of first heat exchange portions 511 that is farthest from the second heat exchange portion 521 along the second direction Y, and another end of the third heat exchange portion 522 extends toward the first heat exchange portion 511 closest to the second heat exchange portion 521. In addition, the fourth heat exchange portion 523 also extends toward the first heat exchange portion 511 farthest from the second heat exchange portion 521.

Further, the third heat exchange flow passage 53 is disposed on a side of the first heat exchange flow passage 51 facing away from the third heat exchange portion 522. In this case, the third heat exchange flow passage 53 and the fourth heat exchange portion 523 are disposed on a same outer peripheral side of the first heat exchange portions 511. Since the third heat exchange flow passage 53 and the fourth heat exchange portion 523 are located at two ends of the first heat exchange flow passage 51 in a fluid flow direction respectively, when the third heat exchange flow passage 53 and the fourth heat exchange portion 523 jointly exchange heat with a same region of the battery assembly 200, temperature differences at the edge of the battery assembly 200 can be reduced, improving temperature uniformity at the edge of the battery assembly 200.

In the above embodiment, extending the third heat exchange flow passage 53 along the second direction Y in the direction away from the second heat exchange portion 521 can increase the heat exchange area of the first heat exchange tube 102, improving the heat exchange effect of the first heat exchange tube 102 on the battery cell 210. Further, when the third heat exchange flow passage 53 and the fourth heat exchange portion 523 jointly exchange heat with the battery assembly 200, temperature differences in the edge region of the battery assembly 200 can be reduced, improving temperature uniformity at the edge of the battery assembly 200.

As shown in FIG. 3 and FIG. 11, the heat exchange member 100 according to the embodiments of this application includes the heat exchange tube 10 according to the embodiments of this application. With the above heat exchange tube 10, the heat exchange area can be increased, improving heat exchange performance, and defects such as collapse, wrinkling, and excessive thinning during the formation of the bent section 12 can be reduced, enhancing the structural strength of the bent section 12 and providing stronger pressure resistance during heat exchange application of the heat exchange tube 10. This helps to prolong the service life.

In some specific embodiments, as shown in FIG. 1, the heat exchange member 100 may further include joints 40, where two ends of the heat exchange tube 10 are connected to the joints 40 respectively for connecting with other structures to allow the heat exchange medium to flow in and flow out of the heat exchange tube 10.

In some embodiments where the heat exchange member 100 includes a plurality of heat exchange tubes 10, the heat exchange member 100 may further include a fluid collector, and the plurality of heat exchange tubes 10 are connected in parallel via the fluid collector.

According to some embodiments of this application, as shown in FIG. 11 to FIG. 13, the heat exchange member 100 has one or more heat exchange tubes 10. When there are a plurality of heat exchange tubes 10, the plurality of heat exchange tubes 10 are spaced apart along the second direction Y, or arranged around each other; at least one heat exchange tube 10 is formed as the above first heat exchange tube 102; and the plurality of heat exchange tubes 10 are arranged in parallel.

It can be understood that there may be one, two, three, four, or more heat exchange tubes 10 in the heat exchange member 100. When there are a plurality of heat exchange tubes 10, one of the plurality of heat exchange tubes 10 may be formed as the first heat exchange tube 102, or two, three, four, or more heat exchange tubes 10 may be formed as the first heat exchange tube 102, or all of the plurality of heat exchange tubes 10 may be formed as the first heat exchange tube 102.

In some specific embodiments, as shown in FIG. 11, the plurality of heat exchange tubes 10 are spaced apart along the second direction Y. For example, as shown in FIG. 11, the heat exchange member 100 may include two heat exchange tubes 10 spaced apart along the second direction Y. Further, both heat exchange tubes 10 may be formed as the first heat exchange tube 102. Alternatively, the heat exchange member 100 may include three heat exchange tubes 10, where the three heat exchange tubes 10 are sequentially arranged along the second direction Y, further, the two heat exchange tubes 10 at two ends among the three heat exchange tubes 10 may form the first heat exchange tube 102, and the middle three heat exchange tube 10 may have a same structure as the first heat exchange tube 102 or a different structure from the first heat exchange tube 102.

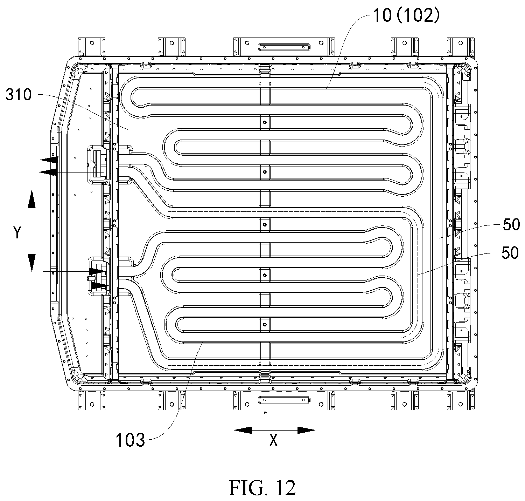

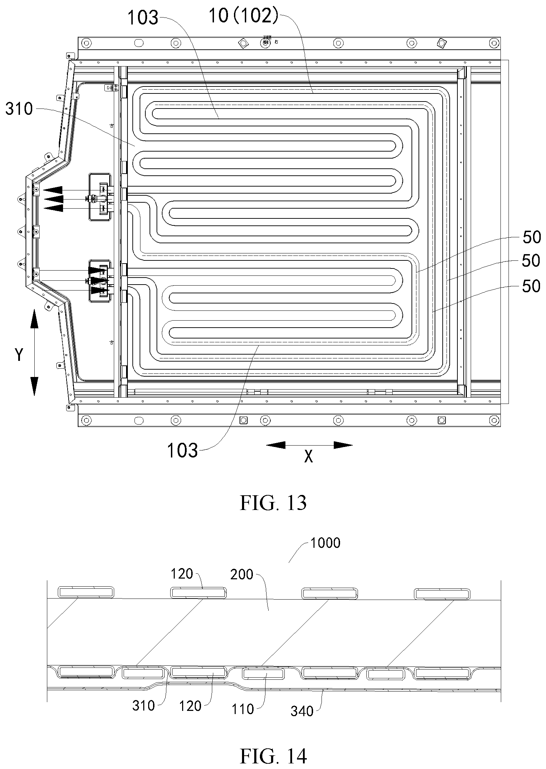

In other embodiments, the plurality of heat exchange tubes 10 are arranged around each other. For example, as shown in FIG. 12, the heat exchange member 100 has two heat exchange tubes 10 connected in parallel, the two parallel heat exchange tubes 10 are arranged around each other, and further, both heat exchange tubes 10 may be formed as the first heat exchange tube 102; or as shown in FIG. 13, the heat exchange member 100 has three heat exchange tubes 10 connected in parallel, the three heat exchange tubes 10 are arranged around each other, and all the three heat exchange tubes 10 may be formed as the first heat exchange tube 102.

The plurality of heat exchange tubes 10 being arranged in parallel means that inlets of the plurality of heat exchange tubes 10 are connected to a same liquid supply tube, and outlets of the plurality of heat exchange tubes 10 are connected to a same liquid outlet tube.

In the above embodiments, providing the heat exchange member 100 with one or more heat exchange tubes 10, with the plurality of heat exchange tubes 10 spaced apart along the second direction Y or arranged around each other, can increase the diversity of heat exchange tubes 10, thereby improving adaptability of the heat exchange member 100 to satisfy different requirements for the battery 1000 and enhancing market competitiveness of the battery 1000. Further, parallel arrangement of the plurality of heat exchange tubes 10 allows simultaneous heat exchange of the plurality of heat exchange tubes 10, reducing heat exchange time of the heat exchange member 100 and improving heat exchange efficiency.

According to some embodiments of this application, as shown in FIG. 12, the plurality of heat exchange tubes 10 include one first heat exchange tube 102 and one second heat exchange tube 103, the second heat exchange tube 103 has a same structure as the first heat exchange tube 102, and the second heat exchange tube 103 is bent and disposed within the U-shaped region 50 of the first heat exchange tube 102. In the above embodiments, providing a plurality of heat exchange tubes 10 can increase the diversity of heat exchange tubes 10, allowing the arrangement of heat exchange tubes 10 to be designed based on the cooling requirements of the battery 1000, further increasing the heat exchange effect of the heat exchange member 100 and improving temperature uniformity of the battery 1000.

According to some embodiments of this application, as shown in FIG. 13, the second heat exchange tube 103 includes a U-shaped region 50 having the same structure as that in the first heat exchange tube 102, and at least part of the first heat exchange flow passage 51 of the first heat exchange tube 102 is disposed within the U-shaped region 50 of the second heat exchange tube 103.

It can be understood that only part of the first heat exchange flow passage 51 of the first heat exchange tube 102 may be disposed within the U-shaped region 50 of the second heat exchange tube 103, or may be disposed entirely within the U-shaped region 50 of the second heat exchange tube 103.

For example, as shown in FIG. 13, the plurality of heat exchange tubes 10 include one first heat exchange tube 102 and two second heat exchange tubes 103, where the two second heat exchange tubes 103 have the same structure as the first heat exchange tube 102.

In the above embodiments, the second heat exchange tube 103 is provided with the U-shaped region 50 having the same structure as that in the first heat exchange tube 102, and at least part of the first heat exchange flow passage 51 of the first heat exchange tube 102 is disposed within the U-shaped region 50 of the second heat exchange tube 103. In this way, at least part of the first heat exchange tube 102 and the second heat exchange tube 103 are arranged around each other. This allows the arrangement of heat exchange flow passages to be designed based on the heat exchange requirements of various parts of the battery assembly 200, further increasing the heat exchange effect of the heat exchange member 100 and improving temperature uniformity of the battery 1000.

As shown in FIG. 11 to FIG. 13, the battery 1000 according to embodiments of this application includes the heat exchange tube 10 according to embodiments of this application. In this way, using the above heat exchange tube 10 can improve the temperature regulation performance of the battery 1000.

In some embodiments, as shown in FIG. 2 and FIG. 11, the battery 1000 further includes a box assembly 300 and a battery assembly 200. The box assembly 300 includes an integrally stamped box body 310, where the box body 310 includes a bottom wall 311 and a surrounding wall 312; the battery assembly 200 is disposed within the box body 310; and the battery assembly 200 includes a plurality of battery cells 210. For example, the box body 310 may be made of sheet metal and stamped into a basin shape to include the bottom wall 311 and the surrounding wall 312. Thus, since the bottom wall 311 and the surrounding wall 312 of the box body 310 are integrally stamped, no sealing is required at a connection between the bottom wall 311 and the surrounding wall 312, improving sealing effect and preventing mud and water from infiltrating the box body 310 through the connection between the bottom wall 311 and the surrounding wall 312, which affects the battery assembly 200. This enhances reliability of the battery 1000. In addition, the integrally stamped box body 310 requires no joining process, improving production efficiency. The battery cells 210 generate heat during operation, or the battery cells 210 are heated in low-temperature environments to maintain the battery cells 210 in an appropriate temperature range. Providing the heat exchange tube 10 enables temperature regulation of the battery cells 210, improving stability of the battery cells 210, and enhancing endurance of the battery 1000.

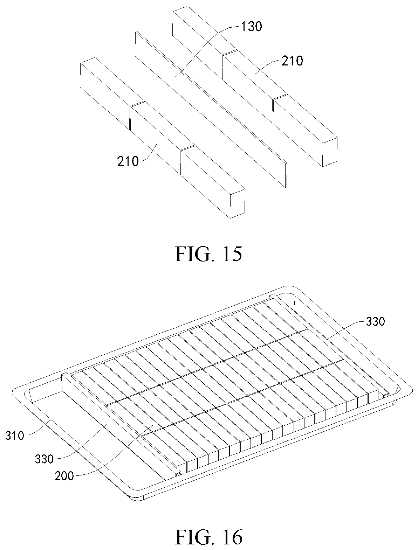

In some embodiments of this application, as shown in FIG. 14 and FIG. 15, the battery 1000 includes a temperature regulation member, where the temperature regulation member includes at least one of a first temperature regulation member 110, a second temperature regulation member 120, and a third temperature regulation member 130; and at least one of the first temperature regulation member 110, the second temperature regulation member 120, and the third temperature regulation member 130 forms the heat exchange tube 10. The first temperature regulation member 110 is disposed outside the box body 310 and attaches to an outer wall of the box body 310. The second temperature regulation member 120 is disposed within the box assembly 300 and located between the battery assembly 200 and the box assembly 300. The third temperature regulation member 130 is disposed within the box assembly 300 and located between two adjacent battery cells 210.

For example, the battery 1000 may include only one of the first temperature regulation member 110, the second temperature regulation member 120, and the third temperature regulation member 130, or include two of the first temperature regulation member 110, the second temperature regulation member 120, and the third temperature regulation member 130, or include all of the first temperature regulation member 110, the second temperature regulation member 120, and the third temperature regulation member 130. Thus, an appropriate position can be selected for the temperature regulation member based on actual conditions to satisfy the temperature regulation requirements of the battery 1000.

A specific position of the first temperature regulation member 110 outside the box body 310 is not limited. For example, with reference to FIG. 14, at least part of the first temperature regulation member 110 may be disposed below the bottom wall 311 of the box body 310, allowing a greater range for heat exchange with the battery assembly 200 and improving temperature regulation effect on the battery assembly 200. For another example, at least part of the first temperature regulation member 110 may be disposed on an outer side of the surrounding wall 312 of the box body 310.

For example, as shown in FIG. 14, the box assembly 300 may further include a bottom guard plate 340 located below the bottom wall 311 of the box body 310 to protect the box body 310 from impacts and the like. In this case, if the first temperature regulation member 110 is disposed below the bottom wall 311 of the box body 310, the first temperature regulation member 110 may be located between the bottom guard plate 340 and the bottom wall 311 of the box body 310, allowing the bottom guard plate 340 to further protect the first temperature regulation member 110.

A specific position of the second temperature regulation member 120 within the box assembly 300 is not limited. For example, with reference to FIG. 14, at least part of the second temperature regulation member 120 may be disposed above the bottom wall 311 of the box body 310, sandwiched between the bottom wall 311 of the box body 310 and the bottom of the battery assembly 200, allowing a greater range for heat exchange with the battery assembly 200 and improving temperature regulation effect on the battery assembly 200. For another example, at least part of the second temperature regulation member 120 may be disposed below a box cover 320, sandwiched between the box cover 320 and the top of the battery assembly 200, allowing a greater range for heat exchange with the battery assembly 200 and improving temperature regulation effect on the battery assembly 200.

A specific position of the third temperature regulation member 130 within the box assembly 300 is not limited. For example, with reference to FIG. 15, large faces of adjacent battery cells 210 in the battery assembly 200 may be opposite each other, and placing the third temperature regulation member 130 between the large faces of adjacent battery cells 210 can improve temperature regulation effect on the battery cells 210.

For example, with reference to FIG. 14, the temperature regulation member may be a flat tube structure, that is, the temperature regulation member is formed as a flat tube with width greater than thickness, with a flow passage formed inside the flat tube. A heat exchange liquid may be introduced into the flow passage for heat exchange with the battery assembly 200, achieving temperature regulation of the battery 1000.

Typically, heat exchange tubes used in batteries are double-layer brazed plate structures, formed by brazing two layers of plates with a heat exchange flow passage between the two plates. In this application, for example, the flat tube may be formed by joining a plurality of extruded tube segments, with the thickness of the flat tube much smaller than a thickness of the double-layer brazed plate structure, occupying less space and improving capacity of the battery 1000.

In addition, the thermal management system of the battery 1000 is not limited to including only the above temperature regulation member. For example, in some embodiments, with reference to FIG. 16, the box assembly 300 may further include an expansion beam 330 disposed within the box body 310. For example, there may be a plurality of expansion beams 330, and the battery assembly 200 is sandwiched between the plurality of expansion beams 330. For example, a first expansion beam 330 and a second expansion beam 330 are included, and the battery assembly 200 is sandwiched between the first expansion beam 330 and the second expansion beam 330. Heat exchange flow passages may be provided within the expansion beams 330 for temperature regulation, forming part of the thermal management system.

As shown in FIG. 1, an electric apparatus according to embodiments of this application includes the battery 1000 according to embodiments of this application. The electric apparatus may be any of the aforementioned devices or systems using the battery 1000. The battery 1000 with improved performance helps enhance operating power performance of the electric apparatus.

It should be noted that, without conflict, the embodiments and features in the embodiments of this application can be combined with each other.

The above are only preferred embodiments of this application and are not intended to limit this application. Various modifications and variations to this application are apparent to those skilled in the art. Any modifications, equivalent replacements, improvements, and the like made within the spirit and principles of this application should be included within the protection scope of this application.

## Claims

1. A heat exchange tube, comprising a plurality of straight heat exchange sections and at least one bent section, wherein the plurality of straight heat exchange sections are spaced apart, and the at least one bent section sequentially connects and communicates with the plurality of straight heat exchange sections;
wherein at least one bent section is provided with a first reinforcement member.

2. The heat exchange tube according to claim 1, wherein each bent section is provided with the first reinforcement member.

3. The heat exchange tube according to claim 1, wherein the bent section comprises two wall surfaces disposed opposite each other, and the first reinforcement member connects the wall surfaces of two opposite sides.

4. The heat exchange tube according to claim 3, wherein the wall surfaces are planar.

5. The heat exchange tube according to claim 3, wherein the first reinforcement member comprises a plurality of first reinforcement ribs, and the plurality of first reinforcement ribs are spaced apart along a bending radius direction of the bent section and divide a heat exchange flow passage within the bent section into a plurality of secondary flow passages.

6. The heat exchange tube according to claim 5, wherein the first reinforcement rib extends perpendicular to the wall surface.

7. The heat exchange tube according to claim 5, wherein the first reinforcement rib extends obliquely relative to the wall surface.

8. The heat exchange tube according to claim 7, wherein the plurality of first reinforcement ribs incline in a same direction.

9. The heat exchange tube according to claim 7, wherein in the bending radius direction of the bent section, the first reinforcement ribs located on two sides of a midpoint of the bent section incline in opposite directions, and the first reinforcement ribs located on a same side of the midpoint of the bent section incline in a same direction.

10. The heat exchange tube according to any one of claims 5 to 8, wherein the plurality of first reinforcement ribs are arranged at an equal interval.

11. The heat exchange tube according to any one of claims 5 to 9, wherein in the bending radius direction of the bent section, a width of the secondary flow passage near the middle is greater than a width of the secondary flow passage near an edge.

12. The heat exchange tube according to claim 11, wherein an inner-edge bending diameter of the bent section is R, a width of the bent section along the bending radius direction is D, and R/D is 1 to 3; in the bending radius direction of the bent section, the secondary flow passage in the middle is a first secondary flow passage; a plurality of second secondary flow passages are provided on two sides of the first secondary flow passage; the plurality of second secondary flow passages have an equal width; and a width of the first secondary flow passage is greater than the width of the second secondary flow passage.

13. The heat exchange tube according to any one of claims 5 to 12, wherein a maximum width of at least two secondary flow passages near the edge is L, a thickness of the bent section in a direction perpendicular to a bending plane is H, and H/L is 0.2 to 3.

14. The heat exchange tube according to claim 13, wherein H/L is 0.8 to 1.2.

15. The heat exchange tube according to claim 5, wherein the plurality of first reinforcement ribs are arranged symmetrically or centrally symmetrically with respect to the midpoint of the bent section.

16. The heat exchange tube according to any one of claims 1 to 15, wherein the inner-edge bending diameter of the bent section is R, the width of the bent section along the bending radius direction is D, and R is greater than or equal to D.

17. The heat exchange tube according to any one of claims 1 to 16, wherein a second reinforcement member is provided within the straight heat exchange section.

18. The heat exchange tube according to claim 17, wherein the second reinforcement member comprises one second reinforcement rib, and the second reinforcement rib is disposed in the middle of the straight heat exchange section in a width direction of the straight heat exchange section; or
the first reinforcement member comprises the plurality of first reinforcement ribs spaced apart along the bending radius direction of the bent section, the second reinforcement member comprises a plurality of second reinforcement ribs, and the second reinforcement ribs are connected to the first reinforcement ribs in one-to-one correspondence.

19. The heat exchange tube according to any one of claims 1 to 18, wherein the heat exchange tube is formed by bending a single tube; and/or the heat exchange tube is a flat tube.

20. The heat exchange tube according to any one of claims 1 to 19, wherein the bent section and the first reinforcement member are integrally formed.

21. The heat exchange tube according to any one of claims 1 to 20, wherein the straight heat exchange section extends along a first direction; the plurality of straight heat exchange sections are spaced apart along a second direction; the first direction is perpendicular to the second direction; and the bent section is connected to two straight heat exchange sections that are spaced apart, and the bent section is semi-circular arc-shaped.

22. The heat exchange tube according to claim 21, wherein among any three adjacent straight heat exchange sections along the second direction, a first end of a middle straight heat exchange section is connected to a first end of one adjacent straight heat exchange section via the bent section, and a second end of the middle straight heat exchange section is connected to a second end of another adjacent straight heat exchange section via the bent section.

23. The heat exchange tube according to any one of claims 1 to 20, wherein at least two straight heat exchange sections extend at an angle, and the bent section is arc-shaped and connects the two straight heat exchange sections extending at an angle.

24. The heat exchange tube according to any one of claims 1 to 20, wherein the heat exchange tube comprises a first heat exchange tube; the first heat exchange tube comprises a first heat exchange flow passage and a second heat exchange flow passage; the second heat exchange flow passage is bent to form a U-shaped region; and the first heat exchange flow passage is bent and disposed within the U-shaped region, and is bent and connected to the second heat exchange flow passage.

25. The heat exchange tube according to claim 24, wherein the first heat exchange flow passage comprises a plurality of first heat exchange portions; and the plurality of first heat exchange portions are spaced apart and are sequentially bent and connected.

26. The heat exchange tube according to claim 24, wherein the second heat exchange flow passage comprises: a second heat exchange portion, a third heat exchange portion, and a fourth heat exchange portion; the second heat exchange portion extends along a first side periphery of the first heat exchange flow passage; the third heat exchange portion is connected between the second heat exchange portion and the first heat exchange flow passage and extends along a second side periphery of the first heat exchange flow passage; a first end of the third heat exchange portion is connected to the second heat exchange portion at an angle and a second end is connected to the first heat exchange flow passage at an angle; and the fourth heat exchange portion communicates with the second heat exchange portion, is connected to the second heat exchange portion at an angle, and extends along a third side periphery of the first heat exchange flow passage.

27. The heat exchange tube according to claim 26, wherein the first heat exchange tube further comprises a third heat exchange flow passage, the first heat exchange flow passage is connected between the third heat exchange flow passage and the second heat exchange flow passage, and the third heat exchange flow passage is connected to the first heat exchange flow passage at an angle.

28. The heat exchange tube according to claim 27, wherein the first heat exchange flow passage comprises a plurality of first heat exchange portions, the plurality of first heat exchange portions are sequentially bent and connected in a second direction, the third heat exchange flow passage is disposed on a side of the first heat exchange flow passage facing away from the third heat exchange portion, the third heat exchange flow passage is connected to one of the plurality of first heat exchange portions that is closest to the second heat exchange portion along the second direction, the third heat exchange flow passage extends along the second direction in a direction away from the second heat exchange portion, the first heat exchange portion extends along a first direction, and the first direction and the second direction are arranged at an angle.

29. A battery, comprising the heat exchange tube according to claims 1 to 28.

30. The battery according to claim 29, comprising a plurality of the heat exchange tubes, wherein the plurality of heat exchange tubes are spaced apart along a second direction or arranged around each other; at least one of the heat exchange tubes is a first heat exchange tube; the first heat exchange tube comprises a first heat exchange flow passage and a second heat exchange flow passage; the second heat exchange flow passage is bent to form a U-shaped region; the first heat exchange flow passage is bent and disposed within the U-shaped region, and is bent and connected to the second heat exchange flow passage; and the plurality of heat exchange tubes are arranged in parallel.

31. The battery according to claim 29, further comprising:
a box assembly and a battery assembly, wherein the box assembly comprises an integrally stamped box body, the box body comprises a bottom wall and a surrounding wall, the battery assembly is disposed within the box body, and the battery assembly comprises a plurality of battery cells.

32. The battery according to claim 31, wherein the battery comprises a temperature regulation member; the temperature regulation member comprises at least one of a first temperature regulation member, a second temperature regulation member, and a third temperature regulation member; and at least one of the first temperature regulation member, the second temperature regulation member, and the third temperature regulation member forms the heat exchange tube, wherein
the first temperature regulation member is disposed outside the box body and attaches to an outer wall of the box body;
the second temperature regulation member is disposed within the box assembly and located between the battery assembly and the box assembly; and
the third temperature regulation member is disposed within the box assembly and located between two adjacent battery cells.

33. An electric apparatus, comprising the battery according to any one of claims 29 to 32.
